# EUROPÄISCHE PATENTSCHRIFT

(11) **EP 2 377 651 B1**
(45) Veröffentlichungstag und Bekanntmachung des Hinweises auf die Patenterteilung: **27.06.2012**
(21) Anmeldenummer: 10159869.6
(22) Anmeldetag: 14.04.2010
(51) Int. Cl.: B25C 5/16, E04D 1/34, F16B 15/00

(54) **Verpackung für Einschlaghaken**
Packaging for punched in hooks
Emballage pour crochets à enfoncer

(43) Veröffentlichungstag der Anmeldung: 19.10.2011
(73) Patentinhaber: Fabricius Fastener GmbH, 33100 Paderborn (DE)
(72) Erfinder: Fabricius, Jürgen, 33102 Paderborn (DE)
(74) Vertreter: Reimann, Silke

(56) Entgegenhaltungen:
- EP-A1- 0 704 282
- EP-A1- 1 431 004
- ES-A1- 2 292 303
- FR-A1- 2 508 520

## Beschreibung

Die Erfindung betrifft eine Verpackung für eine Vielzahl von Einschlaghaken mit einer abgewinkelten Einschlagspitze, die mit einer Schlagmaschine eingeschlagen werden sollen.

Einschlaghaken finden eine vielseitige Anwendung im Baubereich, etwa zur Befestigung von Schieferplatten auf einer Tragkonstruktion aus Holz auf Dächern oder an Fassaden. Dabei werden traditionell die Schieferplattenhaken vom Dachdecker in einer Gürteltasche mitgeführt und Stück für Stück von Hand mit einem Hammer eingeschlagen. Dies ist ein arbeits- und zeitaufwendiges Verfahren, bei dem es immer wieder vorkommt, dass Schieferplattenhaken herunterfallen und damit verloren gehen. Einschlaghaken werden lose geliefert oder über ein Klebeband in einem flachen verband zusammengeführt.
In neuerer Zeit setzt sich immer mehr der Einsatz von Bolzenschußgeräten durch, in denen ein Treibkolben elektrisch, hydraulisch oder pneumatisch schlagartig bewegt wird. Sie dienen dazu Befestigungsmittel, wie beispielsweise Stahlnägel oder Schrauben, zur Befestigung von Gegenständen in einen Untergrund einzuschießen. Typischerweise wird eine Vielzahl von Befestigungsmitteln auf einem flachen schmalen Band aus Pappe oder Kunstgewebe angeordnet und dem Gerät zugeführt, das diese verarbeitet.
In der Patentanmeldung EP 0 864 706 A1 ist ein Magazinstreifen für Schieferplattennägel beschrieben, der nur für die manuelle Verarbeitung von Schieferplattennägeln geeignet ist. Die Verarbeitung mit einer Einschlagmaschine ist nicht vorgesehen.
In der europäischen Patentanmeldung EP2228549 A1 ist eine Magazinstreifen für Schieferplattennägel beschrieben, der als Kunststoffstreifen ausgeführt ist und in eine Einschlagmaschine eingesetzt werden kann. Für den Gebrauch muss der Magazinstreifen zunächst aufwendig mit den Schieferplattenhaken beladen werden und er ist nur für eine Art der Schieferplattenhaken mit zusätzlicher Sicke vorgesehen. Auch ist der Magazinstreifen nicht für die Lagerung und den Transport geeignet.

Gattungsgemäße Verpackungen sind aus ES 2292301 A1 oder FR 2508520 bekannt. Es ist die Aufgabe der Erfindung, eine Verpackung für Einschlaghaken zu offenbaren, die auch als Magazin bei der maschinellen Verarbeitung dienen kann und für mehrere Ausführungen von Einschlaghaken geeignet ist.

Diese Aufgabe wird mit den Merkmalen des Anspruchs 1 gelöst. Vorteilhafte Ausgestaltungen dieser Verpackung sind in den Unteransprüchen beschrieben.

Die Verpackung ist für eine Vielzahl von Einschlaghaken mit einer abgewinkelten Einschlagspitze vorgesehen, die mit einer Schlagmaschine, auch Nagler genannt, eingeschlagen werden sollen. Dabei sind die Einschlaghaken nebeneinander in einer Faltschachtel gefasst, die an einer zu den Einschlaghaken parallelen Schmalseite eine Schiebeöffnung besitzt. Ein Schieber der Schlagmaschine greift so in die Schiebeöffnung ein, dass er die Schlaghaken durch Faltschachtel schiebt und damit jeweils ein Einschlaghaken an der gegenüberliegenden Schmalseite der Faltschachtel aus einer Austrittsöffnung in eine Schlagposition der Schlagmaschine befördert.

Durch die Gestaltung der Verpackung als Faltschachtel mit einer Schiebeöffnung und einer Austrittsöffnung für die darin parallel liegenden Einschlaghaken dient diese Verpackung nicht nur als Transport- und Lagerungsverpackung, sondern auch als Magazin für die maschinelle Verarbeitung der Einschlaghaken mit einer Schlagmaschine. Ein Schieber in einem Magazinträger der Schlagmaschine befördert die Einschlaghaken in die Schlagposition und ein Schlagbolzen schlägt dann den Einschlaghaken an seine Bestimmungsposition.
Der Einschlaghaken kann unterschiedlich geformt sein. So kann er gerade sein oder Sicken besitzen. Er kann auch gerade auslaufen oder ein gebogenes Ende besitzen. Die hier vorgeschlagene Verpackung ist für solche Varianten geeignet.

Für die Lagerung und den Transport der Einschlaghaken ist die Austrittsöffnung der Verpackung mit einem entfernbaren Verschluss versehen. Dieser kann als einfacher Klebestreifen ausgeführt sein.

Eine vorteilhafte Ausführung der Verpackung als Faltschachtel wird anhand der Figuren näher erläutert. Dabei zeigen:
Fig. 1 eine Draufsicht auf den Nutzen der Verpackung,
Fig. 2 eine Draufsicht auf eine gefüllte Faltschachtel,
Fig. 3 eine Sicht auf die Unterseite der gefüllten Faltschachtel,
Fig. 4 eine Seitenansicht der gefüllten Faltschachtel,
Fig. 5 eine Schlagmaschine mit der Verpackung als Magazin.

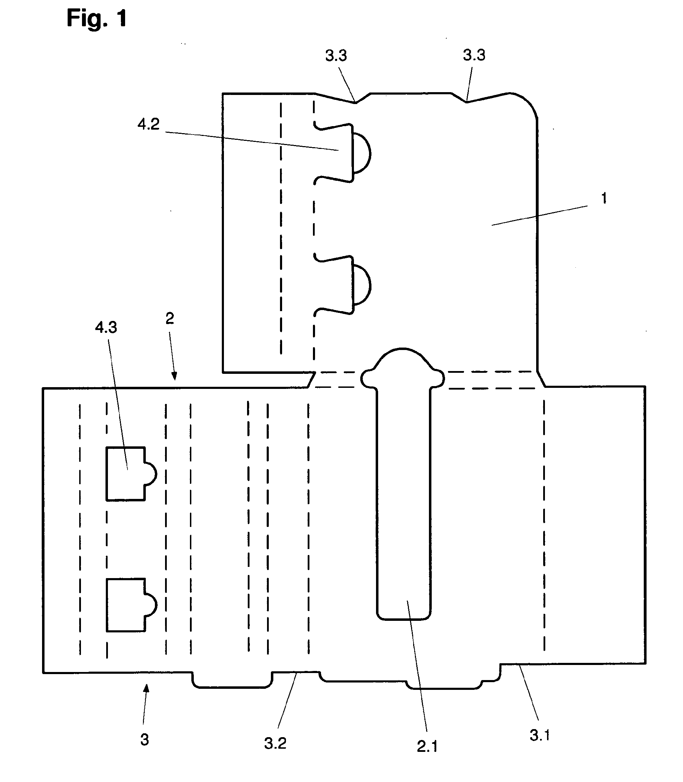

In Fig. 1 ist ein Nutzen einer Faltschachtel 1 in Draufsicht dargestellt. Auf dem Nutzen sind perforierte Linien gestanzt, die die Faltungen zur der Faltschachtel vorgeben. Etwa in der Mitte des Nutzens ergibt sich durch das Falten die Schiebeöffnung 2. und dort ist die Gleitöffnung 2.1 für den Schieber der Schlagmaschine ausgestanzt. Weiterhin sind Stanzungen für die Verrastung der Faltschachtel 1 mittels der Laschen 4.2 und der Öffnungen 4.3 vorhanden
An der Seite des Nutzens für die Austrittsöffnung 3 sind die Ausnehmung 3.1 für das gebogene Ende des Einschlaghakens und die Ausnehmung 3.2. für den Schlagbolzen ausgeschnitten. An dem gegenüberliegenden Ende des Nutzens sind die Ausklinkungen für Einschlaghaken mit Sicken vorgesehen.

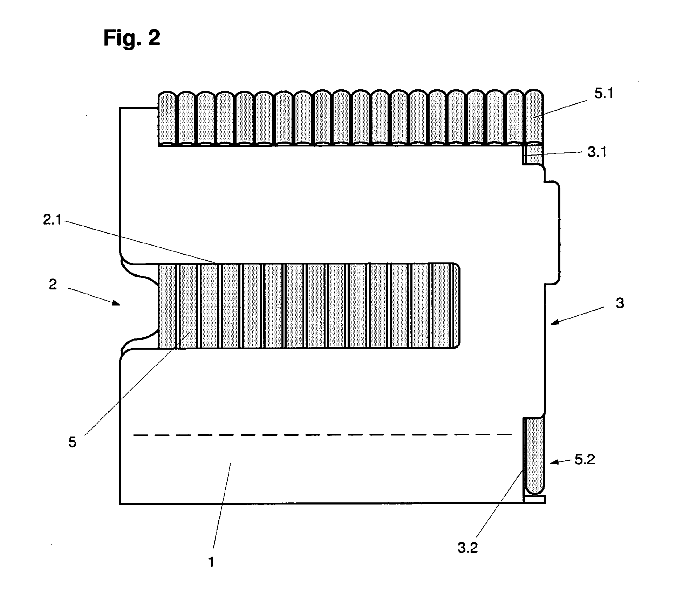

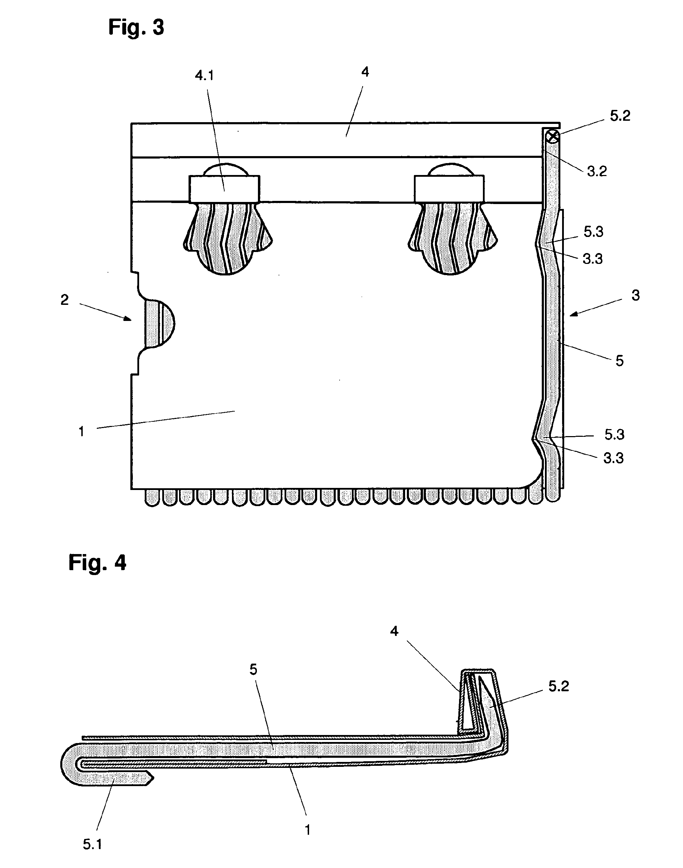

Die Fig. 2 und 3 zeigen jeweils eine Draufsicht auf gegenüberliegende Seiten der Faltschachtel 1, die mit Einschlaghaken 5 gefüllt ist.
Die gebogenen Enden 5.1 der Einschlaghaken 5 ragen aus der Faltschachtel 1 heraus und greifen um das Ende der Oberfläche herum. Ein Einschlaghaken 5 befindet sich an der Austrittsöffnung 3 in der Schlagposition, da seine Einschlagspitze 5.2 in der Ausnehmung 3.2 für einen Schlagbolzen zugänglich ist und sein gebogenes Ende 5.1 durch die Ausnehmung 3.1 frei gehalten ist.
In Fig. 3 sind an der Austrittsöffnung 3 die Ausklinkungen 3.3 gezeigt, die für Einschlaghaken 5 mit Sicken 5.3 vorgesehen sind. Weiterhin ist der aufgestellte Teil 4 der Faltschachtel 1 angedeutet sowie deren Verrastung 4.1 über Öffnungen und Laschen.
An der Seite der Schiebeöffnung 2 kann ein Schieber der Schlagmaschine die Einschlaghaken 5 weiter durch die Faltschachtel drücken. Für den Schieber ist die Gleitöffnung 2.1 freigehalten.

Fig. 4 zeigt einen Querschnitt durch die Faltschachtel 1 mit einem Einschlaghaken 5. Seine Einschlagspitze 5.2 ist in dem aufgestellten Teil 4 geschützt. Sein gebogenes Ende 5.1 ragt aus der Faltschachtel 1 heraus und greift um eine Oberfläche herum.

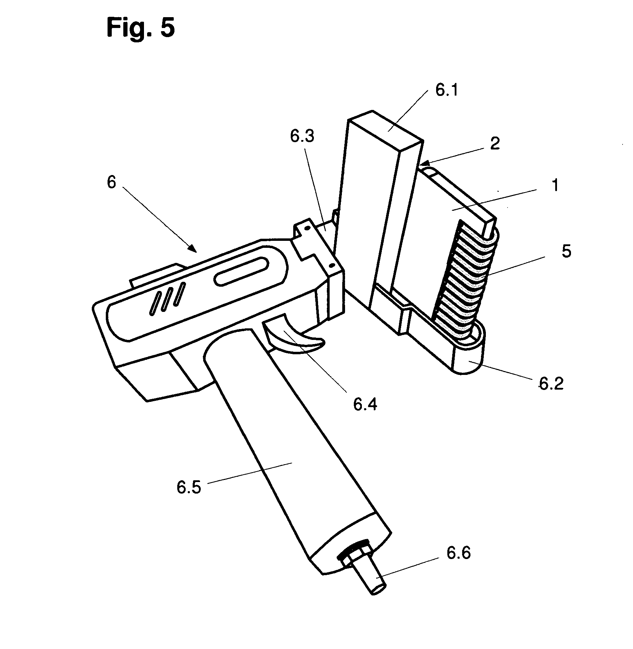

In Fig. 5 ist eine Schlagmaschine 6 dargestellt, an deren Schlagbolzenführung 6.3 der Magazinträger 6.1 befestigt ist, in der der hier nicht sichtbare Schieber geführt ist. Die mit den Einschlaghaken 5 gefüllte Faltschachtel 1 ist in der Halterung 6.2 gehalten und über den Schieber in der Schiebeöffnung 2 ein Einschlaghaken 5 in die Schlagposition gebracht. Das Einschlagen wird über den Abzug 6.4 ausgelöst.
An dem Handgriff 6.5 ist der Anschluss 6.6. vorhanden. Die Schlagmaschine 6 kann elektrisch oder pneumatisch betrieben sein.

### Bezugszeichen

- 1: Faltschachtel
- 2: Schiebeöffnung
- 2.1: Gleitöffnung für Schieber
- 3: Austrittsöffnung
- 3.1: Ausnehmung für das gebogenes Ende 5.1
- 3.2: Ausnehmung für den Schlagbolzen
- 3.3.: Ausklinkung für 5.3
- 4: Aufgestelltes Teil
- 4.1: Verrasterung
- 4.2: Lasche
- 4.3: Öffnung
- 5: Einschlaghaken
- 5.1: Gebogenes Ende
- 5.2: Spitze
- 5.3: Sicke
- 6: Schlagmaschine
- 6.1: Magazinträger
- 6.2: Halterung
- 6.3: Schlagbolzenführung
- 6.4: Abzug
- 6.5: Handgriff
- 6.6: Anschluss, elektronisch oder pneumatisch

## Patentansprüche

1. Verpackung für eine Vielzahl von Einschlaghaken (5) mit einer abgewinkelten Einschlagspitze (5.2), die mit einer Schlagmaschine (6) eingeschlagen werden sollen, **dadurch gekennzeichnet, dass** die Verpackung eine Faltschachtel (1) aufweist, in welche die Einschlaghaken (5) nebeneinander derart gefasst sind, dass die Faltschachtel an einer zu den Einschlaghaken parallelen Schmalseite eine Schiebeöffnung (2) besitzt, in die ein Schieber der Schlagmaschine eingreift und die Einschlaghaken (5) so durch die Faltschachtel (1) schiebt, dass jeweils ein Einschlaghaken an der gegenüberliegenden Schmalseite aus einer Austrittsöffnung (3) in eine Schlagposition der Schlagmaschine befördert wird.

2. Verpackung nach Anspruch 1, **dadurch gekennzeichnet, dass** für die Lagerung und den Transport die Austrittsöffnung (3) mit einem entfernbaren Verschluss versehen ist.

3. Verpackung nach Anspruch 1, **dadurch gekennzeichnet, dass** die Einschlagspitzen (5.2) mit einem aufgestellt gefalteten Teil (4) der Faltschachtel geschützt sind.

4. Verpackung nach Anspruch 1, **dadurch gekennzeichnet, dass** die den Einschlagspitzen (5.2) gegenüberliegende Schmalseite für Einschlaghaken (5) mit einem gebogenen Ende (5.1) offen gehalten ist.

5. Verpackung nach Anspruch 1, **dadurch gekennzeichnet, dass** für den Schieber der Schlagmaschine (6) eine Gleitöffnung (2.1) auf der den Einschlagspitzen (5.2) gegenüberliegenden Oberseite der Faltschachtel (1) eingebracht ist.

6. Verpackung nach Anspruch 1, **dadurch gekennzeichnet, dass** in der Oberseite der Faltschachtel (1) an der Austrittsöffnung (3) eine Ausnehmung (3.2) für einen Schlagbolzen der Schlagmaschine (6) vorgesehen ist.

7. Verpackung nach Anspruch 4, **dadurch gekennzeichnet, dass** in der Oberseite der Faltschachtel (1) an der Austrittsöffnung (3) eine Ausnehmung (3.1) für das gebogene Ende (5.1) der Einschlaghaken vorgesehen ist.

8. Verpackung nach Anspruch 1, **dadurch gekennzeichnet, dass** in der Oberseite der Faltschachtel (1) an der Austrittsöffnung (3) Ausklinkungen (3.3) für Sicken (5.3) der Einschlaghaken vorgesehen sind.

9. Verpackung nach Anspruch 1, **dadurch gekennzeichnet, dass** die Faltschachtel (1) einstückig hergestellt ist.

10. Verpackung nach Anspruch 9, **dadurch gekennzeichnet, dass** die Faltschachtel (1) aus Karton geschnitten ist.

11. Verpackung nach Anspruch 10, **dadurch gekennzeichnet, dass** Öffnungen (4.3) und Laschen (4.2) für die Verrastung der Faltschachtel (1) vorgesehen sind.

## Claims

1. Package for a variety of point hooks (5) with an angled tip (5.2), which are to be applied by a nailing machine (6),
**characterized in that**
the package presents a folded box (1), inside which the point hooks (5) are arranged in such a way that the folded box, on one of the narrow sides parallel to the point hooks, has a slide opening (2), into which engages a slide of the nailing machine and pushes the point hooks (5) across the box (1) in such a way that respectively one hook is ejected on the opposite narrow side through an outlet (3) into a strike position of the nailing machine.

2. Package according to claim 1, **characterized in that**
for storage and transport the outlet opening (3) is provided with a removable closure.

3. Package according to claim 1, **characterized in that**
the pointed tips (5.2) are protected by a raised folded part (4) of the box.

4. Package according to claim 1, **characterized in that**
the narrow side opposite the pointed tips (5.2) remains open for point hooks (5) with one curved end (5.1).

5. Package according to claim 1, **characterized in that**
a glide opening (2.1) for the slide of the nailing machine (6) is provided on the top of the box (1) opposite the tips of the point hook (5.2).

6. Package according to claim 1, **characterized in that**
a recess (3.2) is provided at the outlet (3) in the top of the box (1) for a striker of the nailing machine (6)

7. Package according to claim 4, **characterized in that**
a recess (3.1) for the curved end (5.1) of the point hook is provided at the outlet (3) in the top of the box (1).

8. Package according to claim 1, **characterized in that**
notches (3.3) for indents (5.3) of the point hooks are provided at the outlet (3) in the top of the box (1).

9. Package according to claim 1, **characterized in that**
the box (1) is made of one piece.

10. Package according to claim 9, **characterized in that**
the box (1) is cut out of cardboard.

11. Package according to claim 10, **characterized in that**
openings (4.3) and tabs (4.2) are provided for locking the box (1).

## Revendications

1. Emballage pour une multitude de crochets à enfoncer (5) avec une pointe à enfoncer coudée (5.2), qui doivent être appliqués par une machine à clouer (6),
**caractérisé en ce que**
l'emballage présente une boîte pliée (1), dans laquelle les crochets à enfoncer (5) sont disposés de telle manière que la boîte pliée (1), sur l'un de ces côtés étroits parallèles aux crochets à enfoncer, comporte une ouverture à coulisse (2), dans laquelle s'engage un tiroir de la machine à clouer, et pousse les crochets à enfoncer (5) à travers la boîte pliée (1) de telle sorte que, sur le côté étroit opposé, respectivement un crochet est éjecté par une ouverture de sortie (3) dans une position de frappe de la machine à clouer.

2. Emballage selon la revendication 1, **caractérisé en ce que**
pour le stockage et le transport l'ouverture de sortie (3) est pourvue d'une fermeture amovible.

3. Emballage selon la revendication 1, **caractérisé en ce que**
les pointes à enfoncer (5.2) sont protégés par une partie pliée surélevée (4) de la boîte pliée.

4. Emballage selon la revendication 1, **caractérisé en ce que**
le côté étroit opposé aux pointes à enfoncer (5.2) reste ouvert pour des crochets à enfoncer (5) avec une extrémité courbée (5.1).

5. Emballage selon la revendication 1, **caractérisé en ce que**
une ouverture de glissement (2.1) pour le coulisseau de la machine à clouer (6) est prévu sur la partie supérieure de la boîte pliée (1) opposée aux pointes des crochets à enfoncer (5.2).

6. Emballage selon la revendication 1, **caractérisé en ce que**
un évidement (3.2) pour un attaquant de la machine à clouer (6) est prévu à l'ouverture de sortie (3) dans la partie supérieure de la boîte pliée (1)

7. Emballage selon la revendication 4, **caractérisé en ce que**
un évidement (3.1) pour l'extrémité courbée (5.1) du crochet à enfoncer est prévu à l'ouverture de sortie (3) dans la partie supérieure de la boîte pliée(1).

8. Emballage selon la revendication 1, **caractérisé en ce que**
des encoches (3.3) pour des nervures (5.3) des crochets à enfoncer sont prévus à l'ouverture de sortie (3) dans la partie supérieure de la boîte pliée(1).

9. Emballage selon la revendication 1, **caractérisé en ce que**
la boîte pliée (1) est réalisé en une seule pièce.

10. Emballage selon la revendication 9, **caractérisé en ce que**
la boîte pliée (1) est découpée de carton.

11. Emballage selon la revendication 10, **caractérisé en ce que**
des ouvertures (4.3) et des languettes (4.2) sont prévus pour verrouiller la boîte pliée (1).
